# EUROPEAN PATENT APPLICATION

(11) **EP 3 121 469 A1**
(43) Date of publication of application: **25.01.2017**
(21) Application number: 16172958.7
(22) Date of filing: 03.06.2016
(51) Int. Cl.: F16D 1/10, F16D 9/00

(54) **DRIVE SHAFT ASSEMBLY**

(30) Priority: 02.07.2015 GB 201511606
(71) Applicant: Rolls-Royce plc, London SW1E 6AT (GB)
(72) Inventor: Lee, Wen Yao, Derby, Derbyshire DE24 8BJ (GB); Simpson, Anthony, Derby, Derbyshire DE24 8BJ (GB); Aggarwal, Pranav, Derby, Derbyshire DE24 8BJ (GB); Swift, Andrew, Derby, Derbyshire DE24 8BJ (GB); Scothern, David, Derby, Derbyshire DE24 8BJ (GB)
(74) Representative: Rolls-Royce plc

(57) **Abstract**

A drive shaft assembly comprising a first shaft (32) and a second shaft (34) is disclosed. The second shaft (34) is axially translatable from an engaged configuration with the first shaft at one limit of its travel to a disengaged configuration from the first shaft at the opposite limit of its travel. Engagement of the first and second shafts is via cooperating helical splines (38) provided thereon. The helical splines (38) give rise to a disengaging axial force on the second shaft (34) in a fault condition in which a driving torque is applied from one of the first and second shafts to the helical splines (38) in a rotational direction tending to unscrew the helical splines (38). Consequently when the second shaft (34) is in the engaged configuration the disengaging axial force translates the second shaft (34) to the disengaged configuration.

## Description

The present disclosure concerns drive shaft assemblies. The disclosed drive shaft assemblies may have particular application in gas turbine engines where it may be desirable under certain operating conditions to decouple a driven element such as a fan from the remainder of the drive train. While for simplicity the remainder of the background to the disclosure is explained in the context of an aero gas turbine engine having a drive train for powering a fan, this is not intended to be limiting. Indeed it will be appreciated that the invention may have application in any drive shaft assembly where disengagement is desirable under particular operating conditions.

In an aero turbofan engine a fan is provided at the inlet of the engine that in use is driven by a turbine. The fan and turbine are connected by a drive shaft assembly in order that power generated by the turbine is transmitted to the fan. In particular engine architectures the drive shaft assembly comprises a gearbox, typically to gear down the rotational speed of the fan by comparison with the rotational speed of the driving turbine.

Under particular failure conditions (e.g. loss of lubricating oil or failure of a ring or planet gear) the gearbox may seize, consequently preventing rotation of the fan. Under these conditions the fan, unable to windmill in on rushing air from the inlet of the engine, may present an increased drag force by comparison with an engine failure in which the fan is nonetheless free to windmill. This increased drag caused by the static fan may compound the impact of a loss of power caused by the failure of the engine.

According to a first aspect there is provided a drive shaft assembly comprising optionally a first shaft and optionally a second shaft, the second shaft optionally being axially translatable from an engaged configuration with the first shaft at one limit of its travel to a disengaged configuration from the first shaft at an opposite limit of its travel, engagement of the first and second shafts optionally being via cooperating helical splines provided thereon, said helical splines optionally giving rise to a disengaging axial force on the second shaft in a fault condition optionally in which a driving torque is applied from one of the first and second shafts to the helical splines optionally in a rotational direction tending to unscrew the helical splines, such that when the second shaft is in the engaged configuration the disengaging axial force optionally translates the second shaft to the disengaged configuration, the driving torque optionally being a torque that exceeds any torque applied from the other of the first and second shafts to the helical splines. As a consequence of the first aspect, the drive train can be decoupled at the helical splines. This decoupling may occur when a) the direction of the driving torque remains consistent but the shaft supplying it changes, and/or b) the shaft supplying the driving torque remains consistent but its direction reverses. This may place a system into failsafe configuration (particularly in the case of a)) and/or prevent damage to the drivetrain and or components driven by the drive train (particularly in the case of b)).

In some embodiments the helical splines give rise to an engaging axial force on the second shaft in a reset condition in which the driving torque is applied from one of the first and second shafts to the helical splines in a rotational direction tending to screw together the helical splines, such that when the second shaft is in the disengaged configuration the engaging axial force translates the second shaft to the engaged configuration. This may provide a convenient means for returning the second shaft to the engaged configuration following a fault condition event. As will be appreciated the driving torque may be applied manually for instance as part of a maintenance/repair activity, or may arise automatically if the fault condition passes.

In some embodiments the first shaft is substantially axially fixed. In this way the limit of travel for the second shaft as it reaches its engaged configuration may be provided by an axial stop of the axially fixed first shaft reacting any axial force exerted by the second shaft.

In some embodiments the shaft assembly further comprises a third shaft drivingly engaged with the second shaft, the second shaft being intermediate the first and third shafts. The second shaft may therefore be considered to provide a disengageable connection between the first and third shafts for instance in a shaft coupling region.

In some embodiments the second and third shafts have cooperating axial splines which provide the driving engagement between them. The axial splines may allow for both rotational engagement of the second and third shafts and for axial translation of the second shaft with respect to the third shaft. In alternative embodiments however the cooperating axial splines between the second and third shafts may be replaced with a second set of helical cooperating splines.

In some embodiments the third shaft is substantially axially fixed. In this way the limit of travel for the second shaft as it reaches its disengaged configuration may be provided by an axial stop of the axially fixed third shaft reacting any axial force exerted by the second shaft.

In some embodiments the cooperating axial splines slide axially adjacent one another during translation of the second shaft towards the engaged configuration and towards the disengaged configuration. The splines may therefore act as a guide for translation of the second shaft.

In some embodiments the third shaft is axially positioned and the axial splines of the third shaft are of sufficient length such that the cooperating axial splines remain engaged throughout translation of the second shaft between the engaged configuration and the disengaged configuration.

In some embodiments the drive shaft assembly further comprises a gearbox. The drive shaft assembly may have particular utility in mitigating against gearbox seizure.

In some embodiments the third shaft is provided intermediate the gearbox and the second shaft.

In some embodiments in a non-fault condition the driving torque is applied to the first shaft from the second shaft via the helical splines in a rotational direction tending to screw together the helical splines. When operating in the non-fault condition the engaging axial force therefore tends to retain the second shaft in the engaged configuration. As will be appreciated, and where provided torque may be applied to the second shaft via the third shaft and/or gearbox.

In some embodiments a shear pin is provided arranged to provide an axial force against translation of the second shaft away from the engaged configuration towards the disengaged configuration. As will be appreciated the shear pin may be arranged to shear in the event that the fault condition occurs.

In some embodiments a selectively adjustable retaining element is provided arranged to provide an axial force against translation of the second shaft away from the engaged configuration towards the disengaged configuration. The retaining element may be adjusted in the event that the fault condition occurs such that it no longer provides the axial force against translation of the second shaft. Adjustment of the retaining element may be by active or passive control and could for example comprise a positional adjustment or deformation of the retaining element. Adjustment may be controlled by a controller such as a Full-Authority Digital Electronic Control (FADEC).

In some embodiments the driving torque applied in the fault condition is from the first shaft. Thus where the driving torque in the non-fault condition is applied from the second shaft, the rotational direction of the torque applied in the fault condition is the same as the rotational direction of the torque applied in the non-fault condition.

In some embodiments the driving torque applied in the fault condition is from the second shaft. Thus where the driving torque in the non-fault condition is applied from the second shaft, the rotational direction of the torque applied in the fault condition is opposite to the rotational direction of the torque applied in the non-fault condition.

As will be appreciated the handedness of the cooperating helical splines may be selected to complement the rotational direction of the driving torque in the fault and non-fault conditions and the chosen spline configuration. Thus assuming the second and third shafts have cooperating axial splines and that the driving torque in the non-fault condition is in the clockwise direction, the cooperating helical splines may have right handedness. Similarly, assuming the same arrangement, if the driving torque in the non-fault direction is in the anticlockwise direction, the cooperating helical splines may have left handedness.

In some embodiments a load driven by the drive shaft assembly when operating in the non-fault condition is provided on the first shaft. The load may be a compressor and may be a fan. Decoupling at the helical splines may decouple a prime mover such as a turbine or intermediary drive shaft assembly component such as a gearbox from a load such as a fan.

According to a second aspect there is provided a gas turbine engine comprising the drive shaft assembly according to the first aspect. The gas turbine engine may be an aero gas turbine engine.

In some embodiments a compressor is provided on the first shaft. The compressor may for example be a fan.

In some embodiments when the second shaft is in the engaged configuration the compressor is connected via the drive shaft assembly to a turbine which in use drives the compressor.

In some embodiments the fault condition comprises a seizure of the gearbox. In that case, where for instance in the non-fault condition drive is supplied from the turbine via the drive shaft assembly to the compressor, the loss in drive from the turbine caused by seizure of the gearbox may automatically give rise to the fault condition. In that case the driving torque may no longer be delivered from the second shaft to the first but from the first to the second. The switch in the shaft from which the driving torque is applied occurs because the second shaft is prevented from rotating by the seized gearbox while the first shaft tends to continue rotating primarily in view of the ram air from the inlet of the engine causing a windmilling torque on the first shaft. Because the driving torque from the first shaft is in the same direction as the former driving torque from the second shaft, it tends to unscrew the helical splines, translating the second shaft into its disengaged configuration and disengaging the compressor from the seized gearbox. The compressor may now be free to windmill and therefore may give rise to reduced drag.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a sectional side view of a gas turbine engine;
**Figure 2** is a schematic view showing a drive shaft assembly in accordance with the disclosure in an engaged configuration;
**Figure 3** is a schematic view showing a drive shaft assembly in accordance with the disclosure in a disengaged configuration.

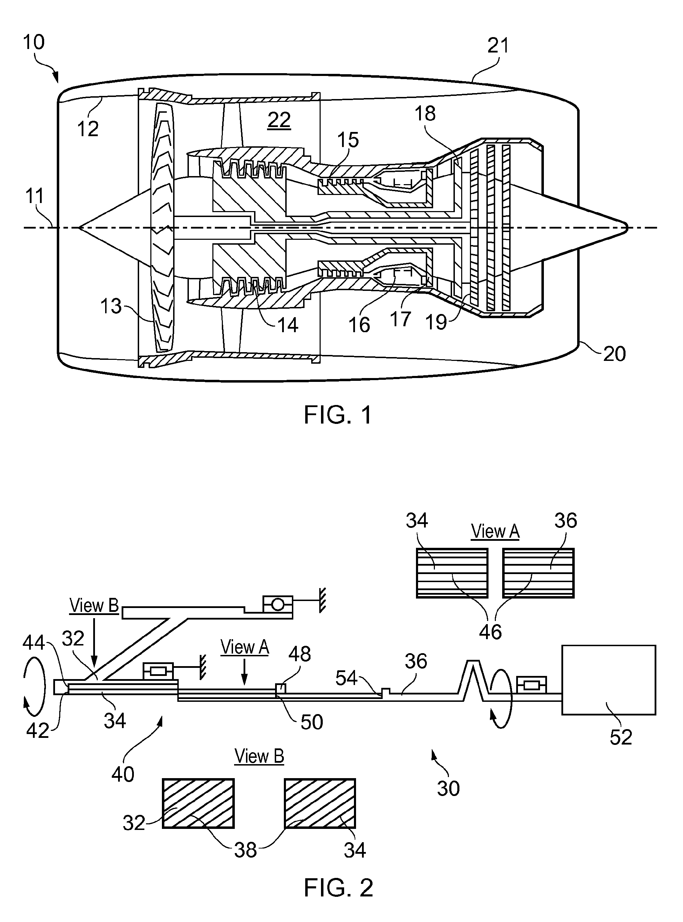

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, and intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

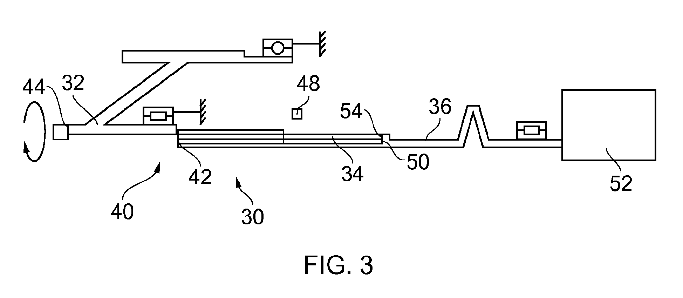

Referring now to Figures 2 and 3 a drive shaft assembly for an aero gas turbine engine is generally shown at 30. The drive shaft assembly 30 comprises a first shaft 32, a second shaft 34 and a third shaft 36. The second shaft 34 is intermediate the first 32 and third 36 shafts. The first 32 and third 36 shafts are positionally fixed in the axial direction. The second shaft 34 is axially translatable between limits of travel in which it is respectively in an engaged configuration with the first shaft 32 and a disengaged configuration with the first shaft 32. In Figure 2 the second shaft 34 is shown in the engaged configuration and in Figure 3 it is shown in the disengaged configuration.

The first shaft 32 has a low pressure compressor, in this case a fan (not shown) provided thereon.

Referring to view B of Figure 2, the first 32 and second 34 shafts are coupled by cooperating helical splines 38 provided thereon in a shaft coupling region 40. The helical splines 38 have right handedness and as shown in Figure 2 are screwed together in the manner of a screw threaded nut and bolt. In the engaged configuration of the second shaft 34 a forward end 42 thereof abuts a first shaft axial stop 44 of the first shaft 32 which defines an axial limit of travel for the second shaft 34. In the disengaged configuration (as shown in Figure 3) of the second shaft 34 the helical splines 38 have been completely unscrewed such that the first shaft 32 and second shaft 34 are no longer coupled.

Referring to view A of Figure 2, the second 34 and third 36 shafts are coupled by cooperating axial splines 46 provided thereon. The axial splines of the third shaft 36 are approximately twice the length of the axial splines of the second shaft 34. As shown in Figure 2, with the second shaft 34 in the engaged configuration, the axial splines of the second shaft 34 are engaged with the half of the axial splines of the third shaft 36 nearest to the first shaft 32. A shear pin 48 is provided on and positionally fixed with respect to the third shaft 36. In the engaged configuration of the second shaft 34 a rearward end 50 thereof abuts the shear pin 48. By contrast, in the disengaged configuration (as shown in Figure 3) the second shaft 34, axially displaced away from the first shaft 32, has its axial splines engaged with the half of the axial splines of the third shaft 36 furthest from the first shaft 32. With the second shaft 34 in the disengaged configuration the shear pin 48 has sheared and is consequently no longer positionally fixed with respect to the third shaft 36. Furthermore the rearward end 50 of the second shaft 34 abuts a third shaft axial stop 54 of the third shaft 36 which defines a further axial limit of travel for the second shaft 34.

The drive shaft assembly 30 further comprises an epicyclic gearbox 52 comprising a sun gear (not shown), planet gears (not shown) provided on a planet carrier (not shown) and a static ring gear (not shown). The planet carrier is connected to the third shaft 36. The third shaft 36 is intermediate the second shaft 34 and gearbox 52 and provides a transmission path from the planet gears to the second shaft 34. The sun gear of the gearbox 52 is connected to an intermediate pressure shaft (not shown). The intermediate pressure shaft connects the sun gear to an intermediate pressure turbine (not shown), providing a transmission path from the intermediate pressure turbine to the sun gear. An intermediate pressure compressor (not shown) is also connected to the intermediate pressure turbine between the gearbox 52 and intermediate pressure turbine. As will be appreciated the particular planetary gearbox arrangement described, with the input provided to the sun gear and the output provided via the planet carrier is not intended to be limiting. In alternative embodiments an alternative epicyclic gearbox configuration may be provided, for instance a star or differential configuration. Further the gear/carrier to which the intermediate pressure shaft and the third shaft are respectively connected may be varied, particularly to suit a particular gearing ratio desired.

In use the drive shaft assembly 30 is normally operated under non-fault conditions. In the non-fault condition the second shaft 34 is engaged with the first shaft 32 as per Figure 2. Clockwise rotational drive is provided from the intermediate pressure turbine via the intermediate pressure shaft to both the intermediate pressure compressor and to the sun gear of the gearbox 52. Rotation of the sun gear drives clockwise orbiting of the planet gears about the sun gear, in turn rotating the planet carrier in a clockwise direction. Rotation of the planet carrier rotates the third shaft 36 and so the second shaft 34 via the cooperating axial splines 46. The clockwise rotation of the second shaft 34 tends to screw together the cooperating helical splines 38 in view of their right handedness, thereby creating an engaging axial force between the first 32 and second 34 shafts tending to maintain the engaged configuration. The sheer pin 48 also tends to maintain the engaged configuration. The clockwise rotation of the second shaft 34 also rotates the first shaft 32 and the fan supported thereon in a clockwise rotation. As will be appreciated in view of the above, when the drive shaft assembly 30 is operated in the non-fault condition, the driving torque is applied to the first shaft 32 from the second shaft 34. Further that driving torque is applied in a rotational direction tending to screw together the helical splines 38.

During operation of the drive shaft assembly 30 in the non-fault condition it may be that the gearbox 52 seizes. Seizure of the gearbox 52 means that driving torque can no longer be applied from the intermediate pressure turbine to the fan via the drive shaft assembly 30. Indeed as a consequence of the seizure of the gearbox 52 and the rotational inertia of the fan and first shaft 32, driving torque is instead applied from the first shaft 32 to the helical splines 38. The transmission of torque from the fan rather than from the turbine constitutes operation in a fault condition.

Under operation in the fault condition the first shaft 32 continues to rotate in the clockwise direction, but because the driving torque is supplied from the first shaft 32 to the helical splines 38 rather than from the second shaft 34 to the helical splines 38, it tends to unscrew the helical splines 38. This in turn gives rise to a disengaging axial force on the second shaft 34, tending to force it axially away from the first shaft 32. As the disengaging axial force is applied it shears the shear pin 48 and causes translation of the second shaft 34 towards its disengaged configuration. As the translation occurs the cooperating axial splines 46 slide axially adjacent one another. Once the disengaged configuration is reached the first 32 and second shafts 34 are no longer connected and the rearward end 50 of the second shaft 34 abuts the third shaft axial stop 54. In this disengaged configuration the fan is not prevented from rotating as it otherwise would be as a consequence of its connection to the seized gearbox. The fan is therefore free to windmill in air that may be passing through it as a consequence of forward motion of an associated aircraft. Consequently the fan may provide reduced drag by comparison with a scenario in which it is prevented from rotating.

As will be appreciated the first 32 and second shafts 34 may be re-engaged. By way of example a maintenance activity may be undertaken in which the gearbox 52 is replaced or a fault giving rise to the seizure is repaired. Thereafter a driving torque may be applied in a clockwise direction from the second shaft 34 to the helical splines 38. This will tend to screw together the helical splines 38 giving rise to an engaging axial force on the second shaft 34 translating it towards the first shaft 32 and its engaged configuration. As will be appreciated a similar engaging axial force would be achieved by applying a driving torque in an anticlockwise direction from the first shaft 32 to the helical splines 38. Once the forward end 42 is abutting the first shaft axial stop 44, a replacement shear pin 48 is provided on and positionally fixed with respect to the third shaft 36. Such a maintenance activity constitutes operation under a reset condition. Once the maintenance activity is complete, operation under the non-fault condition may be resumed.

As will be appreciated, aside from the manner in which the second shaft 34 may be translated from the engaged to the disengaged configuration in the fault condition described above, similar disengagement may be brought about in an alternative fault condition in which the driving torque continues to be applied from the second shaft 34 to the helical splines 38, but its rotational direction is reversed (i.e. in this case anticlockwise). Whilst such functionality may not be required with respect to an aero gas turbine engine, drive shaft assemblies used in alternative applications may benefit from such functionality. Specifically in particular applications it may be that a driving torque rotation reversal might damage components of the drive shaft assembly and/or associated components or systems. In such applications the disengagement may prevent transmission of the driving torque having a reversed rotational direction.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A drive shaft assembly comprising a first shaft and a second shaft, the second shaft being axially translatable from an engaged configuration with the first shaft at one limit of its travel to a disengaged configuration from the first shaft at an opposite limit of its travel, engagement of the first and second shafts being via cooperating helical splines provided thereon, said helical splines giving rise to a disengaging axial force on the second shaft in a fault condition in which a driving torque is applied from one of the first and second shafts to the helical splines in a rotational direction tending to unscrew the helical splines, such that when the second shaft is in the engaged configuration the disengaging axial force translates the second shaft to the disengaged configuration, the driving torque being a torque that exceeds any torque applied from the other of the first and second shafts to the helical splines.

2. A drive shaft assembly according to claim 1 where the helical splines give rise to an engaging axial force on the second shaft in a reset condition in which the driving torque is applied from one of the first and second shafts to the helical splines in a rotational direction tending to screw together the helical splines, such that when the second shaft is in the disengaged configuration the engaging axial force translates the second shaft to the engaged configuration.

3. A drive shaft assembly according to claim 1 or claim 2 where the first shaft is substantially axially fixed.

4. A drive shaft assembly according to any preceding claim where the shaft assembly further comprises a third shaft drivingly engaged with the second shaft, the second shaft being intermediate the first and third shafts.

5. A drive shaft assembly according to claim 4 where the second and third shafts have cooperating axial splines which provide the driving engagement between them.

6. A drive shaft assembly according to claim 5 where the third shaft is substantially axially fixed.

7. A drive shaft assembly according to claim 5 or claim 6 where the cooperating axial splines slide axially adjacent one another during translation of the second shaft towards the engaged configuration and towards the disengaged configuration.

8. A drive shaft assembly according to any of claims 5 to 7 where the third shaft is axially positioned and the axial splines of the third shaft are of sufficient length such that the cooperating axial splines remain engaged throughout translation of the second shaft between the engaged configuration and the disengaged configuration.

9. A drive shaft assembly according to any of claim 4 to 8 where the drive shaft assembly further comprises a gearbox.

10. A drive shaft assembly according to claim 9 where the third shaft is intermediate the gearbox and the second shaft.

11. A drive shaft assembly according to any preceding claim where in a non-fault condition the driving torque is applied to the first shaft from the second shaft via the helical splines in a rotational direction tending to screw together the helical splines.

12. A drive shaft assembly according to any preceding claim where a shear pin is provided arranged to provide an axial force against translation of the second shaft away from the engaged configuration towards the disengaged configuration.

13. A drive shaft assembly according to any preceding claim where the driving torque applied in the fault condition is from the first shaft.

14. A drive shaft assembly according to any of claims 1 to 12 where the driving torque applied in the fault condition is from the second shaft.

15. An aero gas turbine engine comprising the drive shaft assembly according to any of claims 1 to 14.
